# EUROPEAN PATENT APPLICATION

(11) **EP 1 039 728 A1**
(43) Date of publication of application: **27.09.2000**
(21) Application number: 99440057.0
(22) Date of filing: 19.03.1999
(51) Int. Cl.: H04M 1/72

(54) **Cordless telephone system with listening-in capability**

(71) Applicant: ALCATEL, 75008 Paris (FR)
(72) Inventor: Moisset, Eric, 67230 Benfeld (FR)
(74) Representative: Rausch, Gabriele, Dr.

(57) **Abstract**

A cordless telephone system comprises a base station (3) and a plurality of terminals (7, 7', 7'') wherein the base station (3) routes the call between an external terminal and a primary terminal (7) of the cordless telephone system (1). The system (1) comprises at least one secondary terminal (7') adapted for monitoring the call between the external terminal and the primary terminal (7). The secondary terminal (7') also comprises means for triggering signalling of the primary terminal (7) that the call has been monitored. The system (1) permits communication among a plurality of interested parties by allowing a third party to monitor a call of interest between a primary terminal (7) and an external terminal.

## Description

The invention concerns a cordless telephone system and a method for its operation, the system comprising a base station and a plurality of terminals wherein the base station routes a call from an external terminal to a primary terminal of the cordless telephone system.

Cordless telephone call systems are a special kind of a multi-terminal system. Such systems have at least one central access number and a plurality of handsets or terminals generally connected in parallel to a base station. A general feature of cordless telephone systems of this kind is that incoming calls are normally routed to all handsets in the system, wherein all terminals and handsets ring simultaneously in response to an incoming call. Since, however, the different handsets are in general located in different parts of the building in which the cordless telephone system is installed, different users are normally associated with their own specific terminals. It is therefore often the case that an incoming call is nearly invariably directed to a person normally using a particular terminal or handset. For such common calls, all users of all handsets are informed of an incoming call, although the call was only likely to be directed to one particular user of one particular handset. As a result, all users of all handsets are often disturbed by incoming calls intended for only one handset. Moreover, should a plurality of handsets be of possible interest to the incoming call, only the first handset user answering the call has access to the incoming call, and the other possible users of interest are cut-off from the call.

W98/03004 discloses a cordless multi-terminal call system of the above mentioned kind having a central call processor and a controller. The cordless terminals of the system are adapted to communicate with its base station or, if out of range thereof, directly with mobile telephone cellular systems. The system has a controller programmable by a remote keyboard which downloads specific instructions to a call processor in which particular calling line identifiers are stored in association with particular handsets or terminals of the system. When an incoming call is received by the call processor, the call processor checks its internal memory for correlation between this calling line identifier and the information stored therein. Should the call processor find an entry associated with a particular calling line identifier and with a particular handset, the call processor automatically routes the incoming call to the associated handset. In this manner, certain calls are automatically routed to a particular handset such that the other handsets not likely to be interested or relevant to the incoming call are not disturbed by the call.

This cordless telephone system of prior art improves the correlation between an incoming call and a particular handset or handsets most likely to be interested in receiving that call. However, this system has the disadvantage that the first handset which answers the call receives the call. In the event that the call is of interest not only to one but also to a plurality of handsets, only the first user answering the call is party to the call, and there is no capability within the system of allowing a second or even a third user to pertake, at least passively, in monitoring the call.

In view of this deficiency of cordless telephone systems of prior art, it is the purpose of the invention to develop a cordless telephone system which allows improved communication between not only one user but a plurality of users of a cordless telephone system and an external caller.

This purpose is achieved in accordance with the invention in a cordless telephone system having at least one secondary terminal comprising means for monitoring the call between the external terminal and the primary terminal, wherein the secondary terminal also comprises means for triggering signalling of the primary terminal that the call is being monitored. In accordance with the invention, not only the first person answering the call can be party to the call but also other users of the cordless telephone system, who are informed through ringing of their handsets of an incoming call of interest, also have the option of at least monitoring this call. Clearly, a monitoring of the call must be associated with an indication to the external caller, as well as to the internal primary handset user, that such a monitoring process is transpiring. In this manner, both the external caller as well as the internal primary user participating in a two-way conversation have the freedom of allowing a third party to listen-in to their call. Separate communication to the third party concerning the contents of the call is thereby avoided, and improved communication among a plurality of interested parties is achieved.

In an improvement in the system, the base station comprises means for routing an incoming call from the external terminal to ring both the primary and secondary terminals, wherein the primary terminal is that terminal first answering the call. This improvement has the advantage of allowing a correlation between an incoming call and potential users of interest within the cordless telephone system. Such a routing mechanism can be triggered by the calling line identifier of the external caller and correlated with an internal list located in the base station of possible handsets of interest to that calling line identifier. As a result of such a correlation, a subset of the total number of terminals or handsets of the system can be rung. In this manner, users of the internal cordless telephone system not likely to be interested in the call are not disturbed thereby. On the other hand, a subset of users who might be interested in the call are not only informed of an incoming call of interest but, in accordance with the invention, also have the capability of listening-in to the call. In particular, although the first party answering the call automatically becomes the primary user in accordance with this embodiment, other members informed of an incoming call have the option of listening-in thereto.

In an improvement in the invention, the primary terminal initiates the call to the external terminal. This embodiment has the advantage of giving the system capability of not only listening-in to incoming calls but also of listening-in to outgoing calls initiated within the cordless telephone system.

In an advantageous embodiment of the invention, the secondary terminal and the primary terminal comprise means for direct communication with another. This embodiment has the advantage that e.g. the triggering of a listening-in situation by the secondary terminal is directly transmitted from the secondary terminal to the primary terminal without the base station having to exercise additional administrative functions and e.g. transmit a possible signal from the secondary set to the primary set. This frees the base station for other activities and simplifies programming of functions for the base station.

In an improvement in the cordless telephone system in accordance with the invention, the primary terminal comprises means for deciding whether or not to permit the secondary terminal to listen-in. This embodiment has the advantage that the primary terminal is informed of the desire of a third party to listen into a call in progress. This information transfer could be effected either by means of an acoustical signal or by means of an optical signal on a display and/or a combination of both. In response to this request, the primary terminal user can decide whether or not to grant the secondary terminal request. This permits maintenance of privacy while allowing a savings of time since the secondary terminal user cannot listen into a conversation of no interest to him.

In an improvement of the invention, the secondary terminal comprises means to request permission to listen prior to obtaining access to the call. This improvement allows the secondary terminal to inform the primary terminal either directly or through the base station that it would like to listen-in. On the basis of this information, the primary caller can, in this embodiment of the invention, decide whether or not to permit such a listening-in or is at least informed of which party is listening-in.

In an improvement in the invention, the base station comprises means for blocking the secondary terminal from listening to the call. This embodiment has the advantage that the base station can be programmed to limit call access to the primary user only or to a subset of secondary users. This prevents unauthorized secondary users from listening into a particular call to which they have no right for access.

In an improvement of this embodiment, the base station routes the ongoing call between the primary and external terminals to the secondary terminal. This embodiment has the advantage that the secondary terminal does not directly receive the communication. This embodiment can be effected using an identifier associated with a secondary terminal which must be present in the secondary terminal input data stream before that terminal can respond to the incoming call. In this manner, unauthorized access to a call by a third party terminal can be prevented.

In an improvement in this particular embodiment, the base station blocking facility is programmed by the primary user to block routing to a secondary terminal or terminals. This particular improvement has the advantage that personal or confidential conversations can not be monitored should the primary user decide that a given conversation must be kept private. This embodiment also provides a simple method for triggering the blocking function.

Further advantages of the cordless telephone system in accordance with the invention and the method for its use can be extracted from the subsequent figures describing a preferred embodiment of the invention in connection with the claims. These figures represent an embodiment only and do not constitute exhaustive enumeration of all possible inventive configurations. In particular, the features disclosed in the drawings and in the claims can be utilized in accordance with the invention individually or collectively in arbitrary combination.
- Fig. 1: shows a schematic view of multi-terminal system in accordance with the invention;
- Fig. 2: shows a detailed drawing of the base station portion of the multi-terminal user system in accordance with Fig. 1; and
- Fig. 3: shows a detail of one particular terminal for use in a multi-terminal system in accordance with Fig. 1.

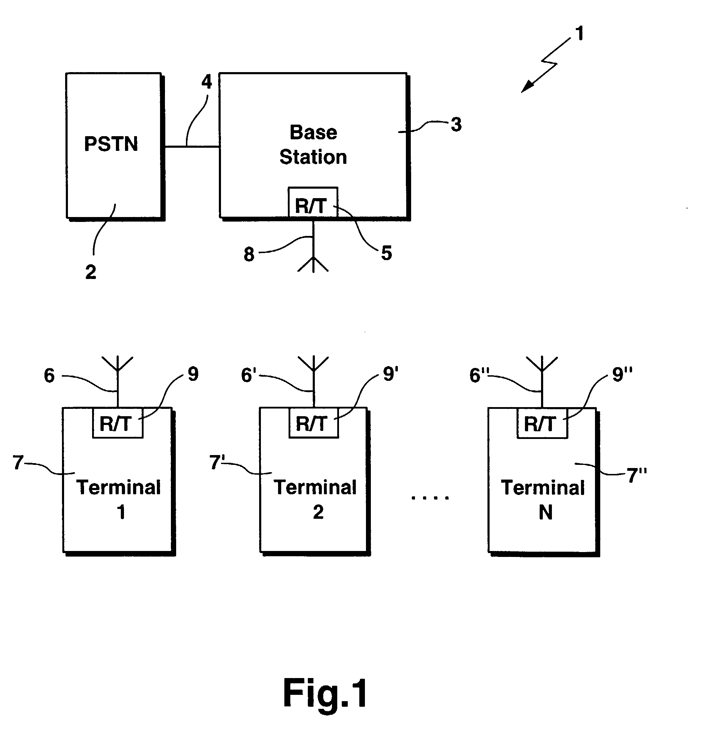

The multi-terminal system 1 illustrated in Fig. 1 comprises a base station 3 connected via cable connection 4 to a public switched telephone network 2. The system 1 comprises N terminals 7, 7', ..., 7'' of which only a first, second, and n^{th} terminal are illustrated in the figure. The base station comprises a radio frequency transmitter/receiver 5 for communication with a plurality of cordless terminals 7, 7', ..., 7'' of the N terminal system via antenna 8. This particular embodiment preferentially represents a cordless system of a PABX user (PABX = Private Automatic Branch Exchange). In a preferred embodiment, the cordless telephone system is a DECT system.

Fig. 1 shows a first terminal 7, a second terminal 7', and an N^{th} terminal 7'' of the system. Each terminal has its own antenna 6, 6', 6'' connected to respective transmitter/ receivers 9, 9', 9" for communication with the base station 3. Both the base station transmitter/receiver 5 and the terminal transmitter/receiver 6, 6' 6'' comprise conventional radio frequency electronics not explicitly illustrated.

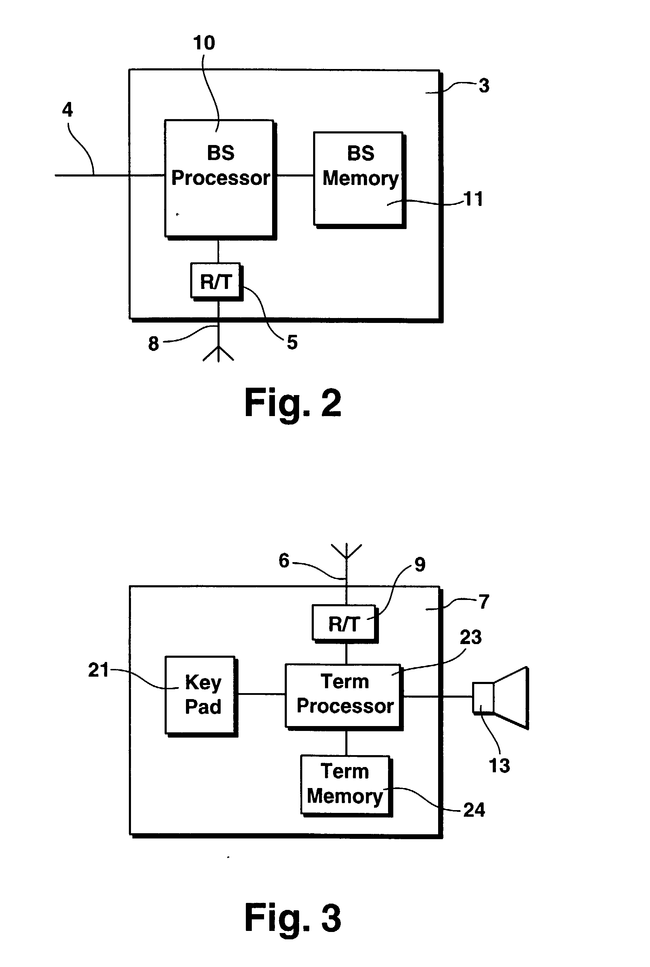

Fig. 2 gives a more detailed view of the base station illustrating features pertinent to the invention. The incoming cable 4 from the public station network 2 directly connects to a base station processor 10. The base station processor communicates with base station memory 11 as well as with base station transmitter/receiver 5. The processor 10 accepts analog and/or digital signals coming from a network 2 and translates these signals into appropriate digital signals for internal use within the multi-terminal system. The transmitter/receiver 5 receives digital signals exported by the base station processor 10 to generate radio frequency signals delivered to antenna 8. The transmitter/receiver 5 thereby comprises conventional means for conversion of outgoing digital instructions from the processor 10 into associated radio signals for reception by the terminals 7, 7', 7'' as well as conventional electronics for converting radio signals received from the terminal 7, 7', 7'' into appropriate digital signals for internal use by the base station processor 10. The base station memory 11 communicates with the base station processor 10 to accept downloaded storage instructions therefrom. Clearly, the base station 3 can also comprise additional conventional electronic components such as displays, Eproms and the like which are not illustrated in Fig. 2 for reasons of clarity.

Fig. 3 provides a somewhat more detailed sketch of a particular terminal 7. All terminals 7, 7', 7'' illustrated in Fig. 1 are, in this embodiment, considered to be of essentially the same construction. The handset 7 of Fig. 3 comprises a key pad 21 communicating with a terminal processor 23. The terminal processor 23 is connected to a receiver/transmitter 9 as well as to a terminal memory 24. A reciever/transmitter 9 communicates radio frequency signals to the antenna 6 and receives signals therefrom and comprises conversion circuitry for appropriate analog/digital conversion for internal use by the terminal 7. The terminal processor 23 is adapted to accept key pad 21 stroke instructions entered by a user in order to download memory storage instructions into the memory 24 and/or to generate radio frequency signals via transmitter 9 for radiation by antenna 6. The terminal processor is also connected to a loudspeaker 13 for generating an acoustical signal to the user. Clearly, the terminal 7 can contain other conventional electronics, for example, displays, Eproms, a microphone for receiving acoustical input from the user and the like which are not illustrated for reasons of clarity. The circuitry described in the base station and in the terminals includes programmable components or arrangements of programmable components and is designed and constructed to carry out the following functions.

When an external user calls the cordless telephone system, a signal is transmitted from the PSTN 2 over cable 4 into the base station 3 of the system. In response to this incoming call, the base station 3 examines, using the base station processor 10 in consultation with the base station memory 11, a calling line identifier of the incoming call to determine whether or not this incoming call is likely to be of interest to specific terminal users of the system. Should the calling line identifier of the incoming call be registered in the base station memory 11 as being of particular interest to a certain number of handsets or terminals in the system, the base station processor 10 instructs the receiver/transmitter 5 to ring these handsets. For reasons of clarity, this particular embodiment assumes, without loss of generality, that terminal 7 is the primary user and terminal 7' is a secondary user and that only these two users 7 and 7' are informed of the incoming call by the base station. In other embodiments of the invention, a plurality of secondary terminals participate in monitoring the call. In response to the instructions of the base station 3 and the electromagnetic radiation generated via the base station transmitter 5 and antenna 8, the antenna 6 and the receiver/transmitter 9 of the primary terminal 7 as well as the antenna 6' and the receiver/transmitter 9' of the secondary terminal 7' cause the respective terminals or handsets to ring in response to the instructions from the base station 3. In this example, the primary terminal 7 is that terminal which answers the call first. In answering the call, terminal 7 has a communication connection to the external user via the base station 3 and PSTN 2 as described above. However, the secondary terminal 7' has also been informed of an incoming call. In response to attempts by the secondary user of terminal 7' to receive the incoming call the base station 3 informs the user of secondary terminal 7' that the call has already been answered by another terminal in the system. Should the secondary terminal user 7' be interested in monitoring the call, the secondary terminal user 7' instructs the base station 3 to issue a request for listening-in. This can be done through a key stroke on the key pad of the secondary terminal 7'. In response to this message by the secondary terminal 7', the base station 3 transmits a request to the primary user 7 informing him that terminal 7' requests permission to listen into the call. In response to this request, terminal 7' can instruct the base station to allow the terminal 7' to listen into the call. In response to this permission, the base station 3 radiates a call identifier to terminal 7' which is downloaded by terminal processor 23 to facilitate acceptance by the terminal 7' of both the external call information transmitted by the receiver/transmitter 5 of the base station 2 as well as the radio frequency signals radiated by the primary terminal 7 either directly through reception of those primary signals radiated by antenna 6 via antenna 6' of the secondary terminal 7' or through repeated radiation of the signals by the base station 3. In this manner, the secondary terminal 7' can monitor the incoming call 7 and the primary user of terminal 7 is informed of the listening-in function.

## Claims

1. A cordless telephone system (1) comprising a base station (3) and a plurality of terminals (7, 7', 7''), the base station (3) routing a call between an external terminal and a primary terminal (7) of the cordless telephone system (1), the system (1) having at least one secondary terminal (7') comprising means for monitoring the call between the external terminal and the primary terminal (7), the secondary terminal (7') also comprising means (21) for triggering signalling to the primary terminal (7) that the call is being monitored.

2. A system of claim 1, characterized in that the base station (3) comprises means for routing an incoming call from the external terminal to ring both the primary (7) and secondary terminal (7'), wherein the primary terminal (7) is that terminal (7, 7', 7'') first answering the call.

3. The system of claim 1, characterized in that the primary terminal (7) initiates the call to the external terminal.

4. The system of any one of the preceding claims,
characterized in that the secondary terminal (7') and the primary terminal (7) comprise means for direct communication with another.

5. The system of any one of the preceding claims,
characterized in that the primary terminal (7) comprises means for deciding whether or not to permit the secondary terminal (7') to listen-in.

6. The system of any one of the preceding claims,
characterized in that the secondary terminal (7') comprises means to request permission to listen-in prior to attaining access to the call.

7. The system of any one of the preceding claims,
characterized in that the base station (3) comprises means for blocking the secondary terminal (7') from listening to the call.

8. The system of claim 7, characterized in that the base station blocking means blocks routing of the call to the secondary terminal (7').

9. The system of claim 8, characterized in that the base station blocking means are instructed by the primary terminal (7) to block routing to the secondary terminal (7').

10. A method for operating a cordless telephone system (1), the system (1) comprising a base station (3) and a plurality of terminals (7, 7', 7''), the base station (3) routing a call between an external terminal and a primary terminal (7) of the cordless telephone system (1), the system (1) also comprising at least one secondary terminal (7'), wherein the secondary terminal (7') monitors the call between the external terminal and the primary terminal (7), and wherein the secondary terminal (7') triggers signalling to the primary terminal (7) that the call is being monitored.

11. The method of claim 10, characterized in that the base station (3) routes an incoming call from the external terminal to ring the primary (7) and secondary (7') terminals, wherein the primary terminal (7) is that terminal (7, 7', 7'') first answering the call.

12. The method of claim 10 or 11, characterized in that the primary terminal (7) initiates the call to the external terminal.

13. The method of any one of the preceding claims,
characterized in that the secondary terminal (7') directly communicates with the primary terminal (7).

14. The method of any one of the preceding claims,
characterized in that the primary terminal (7) decides whether or not to permit the secondary terminal (7') to listen-in.

15. The method of any one of the preceding claims,
characterized in that the secondary terminal (7') requests permission to listen-in prior to attaining access to the call.

16. The method of any one of the preceding claims,
characterized in that the base station (3) can prevent the secondary terminal (7') from listening to the call.

17. The method of claim 16, characterized in that the base station (3) blocks routing of the call to the secondary terminal (7').

18. The method of claim 17, characterized in that the base station (3) is instructed by the primary terminal (7) to block routing to the secondary terminal (7').
